# EUROPÄISCHE PATENTANMELDUNG

(11) **EP 1 443 451 A1**
(43) Veröffentlichungstag der Anmeldung: **04.08.2004**
(21) Anmeldenummer: 03026954.2
(22) Anmeldetag: 25.11.2003
(51) Int. Cl.: G06K 9/00

(54) **Bilderkennungsverfahren zur Auswertung von Dunkelfeldmikroskopiebildern und Vorrichtung hierfür**

(30) Priorität: 26.11.2002 DE 10255097
(71) Anmelder: Scheller, Ekkehard, 85521 Ottobrunn (DE)
(72) Erfinder: Scheller, Ekkehard, 85521 Ottobrunn (DE)
(74) Vertreter: KUHNEN & WACKER

(57) **Zusammenfassung**

Es wird ein Bilderkennungsverfahren zur Auswertung von mittels Dunkelfeldmikroskopie erzeugter Dunkelfeldbilder von sich in nativem Blut befindenden Objekten vorgeschlagen, bei den es sich bspw. um Candida albicans, Candida parapsilosis, Candida sklerosis oder andere Candida-Arten handeln kann. Das vorgeschlagene Verfahren umfaßt die Schritte Bilderzeugung und Bildausgabe, Vergleich spezifischer Muster eines Bildes mit bekannten Mustern, Feststellung von Abweichungen und/oder Übereinstimmungen, und Ausgabe des Ergebnisses, um welche Candida-Art es sich handelt. Die vorliegende Erfindung gibt ferner eine insbesondere zur Durchführung des erfindungsgemäßen Verfahrens geeignete Vorrichtung an.

## Beschreibung

Die vorliegende Erfindung betrifft ein Bilderkennungsverfahren zur Auswertung von mittels Dunkelfeldmikroskopie erzeugter Dunkelfeldbilder von in nativem Blut befindlichen Objekten wie bspw. Hefepilze nach dem Oberbegriff des Anspruchs 1, sowie eine Vorrichtung hierfür, nach dem Oberbegriff des Anspruchs 10.

Die Besiedelung des menschlichen Darms durch Mikroorganismen wie Bakterien und Pilze ist ein allgemein bekanntes Phänomen. Bei den im Darm nachweisbaren Mikroorganismen handelt es sich in der Mehrzahl der Fälle um nicht pathogene Vertreter ihrer Art, die für die menschliche Gesundheit unschädlich sind. Diese Keime werden als physiologisch vorhanden bezeichnet, einigen von ihnen kommen sogar wichtige Aufgaben etwa im Rahmen der menschlichen Verdauung zu.

Zu den o. g. Mikroorganismen gehören neben Bakterien auch Pilze. Ein besonders bekannter Pilz ist der sog. Candida-Pilz, der zu den Hefepilzen zählt. Candida ist ein ubiquitär vorkommender Pilz, der sich im menschlichen Darm nachweisen läßt, zur Verdauung beiträgt und laut der im Rahmen der sog. Schulmedizin herrschenden Meinung nur in besonderen Situationen und bei deutlich reduziertem Gesundheitszustand des Patienten ein gesundheitliches Problem für den Gastorganismus darstellt. Bei den wenigen, dennoch hiervon betroffenen Patienten handelt es sich oftmals um nachhaltig antibiotisch behandelte oder immunsupprimierte Patienten wie kachektische Tumorpatienten, Patienten nach chemotherapeutischer Behandlung oder AIDS-Patienten. Die von einer sog. Kandidiasis betroffenen Patienten zeigen i. a. schwere Symptome der Sepsis, aber auch lokale Manifestationen nach Streuung von Candida an Haut, Lunge, Auge oder dem Gehirn sind beschrieben und müssen i. d. R. intensivmedizinisch behandelt werden.

Sieht man von den genannten Patienten dieser Risikogruppe, die aufgrund ihrer geschwächten Immunlage gegenüber fast allen bekannten Erregern geschwächt sind, einmal ab, so geht die herrschende - schulmedizinische - Lehrmeinung jedoch von keiner weiteren Gesundheitsbeeinträchtigungen durch Candidabefall aus. Zudem gilt heute auch noch die Vermutung, daß Candida im Blut nicht vorkommt, zumindest nicht nachweisbar ist. Die mögliche Existenz einer sog. Blutmykose (Pilzbefall des Blutes) wird aufgrund der Kenntnis der biochemischen Eigenschaften des Blutes allgemein verneint, zumal eine Blutmykose mit den üblichen labormedizinischen Verfahren bislang auch nicht darstellbar ist.

Entgegen dieser Meinung gelang es dem Erfinder mittels der Dunkelfeldmikroskopie, Candida in nativem Patientenblut festzustellen. Das von ihm hierzu verwendete Dunkelfeldmikroskop arbeitet mit am untersuchten Objekt vorbeigehenden Lichtstrahlen und erlaubt aufgrund seiner Technik insbesondere den Nachweis und die Beurteilung selbst intrazellulär liegender Objekte, wie bspw. Kristalle.

Erste bedeutende Publikationen über Untersuchungen mit dem Dunkelfeldmikroskop wurden Anfang des 20. Jahrhunderts von dem Zoologen Prof. Enderlein veröffentlicht. Die Dunkelfeldmikroskopie wird vor allem in der Botanik und der wissenschaftlich betriebenen Mikrobiologie angewandt. Im Rahmen der diagnostischen und therapeutischen Heilkunde kommt sie bislang allenfalls vereinzelt zum Einsatz. Sie ist nicht Gegenstand des Medizinstudiums.

Der Erfinder konnte mit Hilfe des Dunkelfeldmikroskops im menschlichen Blut jedoch nicht nur Candida in unterschiedlichen Entwicklungsstadien bzw. Formen nachweisen, sondern er vertritt zudem die berechtigte Annahme, daß das Vorhandensein von Candida im menschlichen Blut beim Träger für eine Reihe von Symptomen wie bspw. Erschöpfung, Stimmungsabfall, Juckreiz, Schmerzzustände, aber auch für Haut- und Darmerkrankungen, rheumatische Erkrankungen, Depression u. a. verantwortlich ist.

Ferner konnte der Erfinder Formen und Arten von Candida beobachten, wie sie bis heute nicht bekannt waren. Des weiteren hat sich der Verdacht erhärtet, daß sich Candida maskieren kann und dies ein wesentlicher Grund dafür ist, daß Candida mittels des üblichen Antikörpemachweises im Blut nicht nachzuweisen ist.

Diese Bedeutung von Candida auf die Gesundheit des Menschen (dasselbe gilt - wie alles hier erwähnte - natürlich auch für Tiere) und die Tatsache, daß die in den Heilberufen Ausgebildeten i. d. R. keine Ausbildung in der bei Candidabefall zur Diagnosestellung so wichtigen Dunkelfeldmikroskopie erfahren haben, bedingen einen Diagnoserückstand, was die Candidamykose, insbesondere im Blut, betrifft. Da Candida in jüngster Zeit zudem in neuen, bislang unbeobachteten Formen auftritt, erfordert eine rasche und sichere Versorgung der Bevölkerung eine Unterstützung der Diagnostiker in den Praxen technischer Art.

Um hier nun Abhilfe zu schaffen und die nötige technische Unterstützung zu gewähren, ist es Aufgabe der vorliegenden Erfindung, ein Bilderkennungsverfahren zum automatisierten Vergleich von mittels der Dunkelfeldmikroskopie erzeugter Bilder von in nativem Blut befindlichen Objekten vorzuschlagen. Weiterhin ist es Aufgabe der Erfindung, eine hierfür geeignete Vorrichtung zur Durchführung vorzuschlagen.

Diese Aufgabe und weitere Ziele werden gelöst durch die Merkmale des Anspruchs 1 als auch durch die Merkmale des Anspruchs 10.

Dementsprechend schlägt die vorliegende Erfindung ein Bilderkennungsverfahren zur Auswertung von mittels Dunkelfeldmikroskopie erzeugter Dunkelfeldbilder von in nativem Blut befindlicher Objekte, wie beispielsweise Candida albicans, Candida parapsilosis, Candida sklerosis oder anderen Candida-Arten, mit den Schritten Bilderzeugung und Bildausgabe, Vergleich spezifischer Muster eines Bildes mit bekannten Mustern, Feststellung von Abweichungen und/oder Übereinstimmungen zwischen den Mustern, und Ausgabe des Ergebnisses, um welche Candida-Art es sich auf den Dunkelfeldbildem handelt, vor.

Dieses erstmals vorgeschlagene Bilderkennungsverfahren bietet dem Diagnostiker in vorteilhafter Weise den Vergleich der von ihm aufgenommenen Dunkelfeldbilder, insbesondere mit bestehenden Bildern, beispielsweise aus einer Datenbank, was einen objektiven Vergleich zwischen seinem Befund und weiteren, gesicherten Befunden vorteilhaft ermöglicht. Dieser Vergleich kann durch eine Bilderkennungssoftware unterstützt werden, die für einzelne Candida-Arten spezifische bildliche Charakteristika mit der Präzision und Geschwindigkeit der verwendeten Rechenanlage aufsuchen helfen.

Der Vergleich der gewonnenen Dunkelfeldbilder mit Bildern, die aus einer Datenbank stammen, kann dem befundenden Arzt oder Heilpraktiker eine zusätzliche Stütze sein. Diese Unterstützung kann dem erfahrenen Dunkelfelddiagnostiker in Zweifelsfällen beim Finden der treffenden Diagnose behilflich sein, sie kann aber auch dem mit der Dunkelfeldmikroskopie Unerfahrenen bei der Diagnosefindung von großer Hilfe sein. Der unroutinierte Dunkelfelddiagnostiker wird mittels des erfindungsgemäßen Verfahrens vorteilhaft in die Lage versetzt, Befunde nicht zu übersehen und in Folge Diagnose und Therapie sicherer und vor allem korrekt zu bestimmen bzw. festzulegen, was ihm in wenigstens einzelnen Fällen ohne Unterstützung durch das Verfahren nicht möglich wäre.

Bevorzugte Ausgestaltungsformen des erfindungsgemäßen Verfahren weisen zusätzliche folgende Schritte oder eine Kombination der folgenden Schritte auf. So werden die erzeugten Dunkelfeldbilder in einer Fortbildung in einer Speichereinrichtung abgelegt. Ferner werden die Bilddaten und/oder zusätzliche Informationen mittels einer Datenübertragungseinrichtung übertragen. Die Untersuchungsbefunde werden in einer Klassifizierungseinrichtung klassifiziert und/oder in einer Auswertungseinrichtung von bzw. für Dunkelfeldbilder ausgewertet. Ferner läuft die Aufnahme und/oder Verwaltung von Dunkelfeldbildern und/oder die Verwaltung zusätzlicher Informationen automatisch ab. Die Einstellungen für die Bilderzeugung und/oder Ausgabe, insbesondere der zu wählende Vergrößerungsmaßstab werden ferner optimiert. Die sich hierbei ergebenden Vorteile werden unten stehend bei der Diskussion der zur Durchführung verwendeten Vorrichtungen beschrieben.

Bei einer weiter bevorzugten Ausgestaltungsform werden die Einstellungen für die Bilderzeugung und/oder Ausgabe, insbesondere der zu wählende Vergrößerungsmaßstab, automatisch optimiert. Diese Optimierung führt zu vorteilhafter Ausnutzung der jeweils höchstmöglichen Auflösung für eine bestmögliche Bildqualität und erlaubt somit das Erkennen von kleinsten Details sowie bereits geringfügiger Veränderungen.

Bei einer weiter bevorzugten Ausgestaltungsform werden in Abhängigkeit der festgestellten Candida-Art Behandlungsvorschläge ausgegeben. Dies stellt vorteilhaft sicher, daß Fehlbehandlungen, nicht anzeigte oder gar obsolete Behandlungen vermieden werden, da dem Behandelnden zusammen mit dem aufgenommenen Dunkelfeldbild nicht nur die Diagnose, sondern auch die empfohlene Therapie ausgegeben wird. Insbesondere in Verbindung mit einer in einer weiter bevorzugten Ausgestaltungsform vorgesehenen zentralisierten Auswertung ist das Aufzeigen der Therapie von Interesse, da die Behandlungsvorschläge aus einer stets aktualisierten, den neuesten medizinischen Erkenntnissen angeglichenen Datenbank entnommen werden kann und der Behandelnde sich in seiner Behandlung somit an den neuesten Erkenntnissen orientieren kann.

Bei einer weiter bevorzugten Ausgestaltungsform erfolgt ein schneller Austausch der Daten mit externen Rechenzentren und/oder medizinischen Datenbanken. Dies bietet dem Untersucher den Vorteil, daß er eine rasche Bestätigung seiner Diagnose, aber auch zugleich die rasche Mitteilung über die angezeigte Therapie erhalten kann. Hierdurch aber kann die nach Diagnosestellung einzuleitende Therapie ohne Zeitverzug beginnen.

Bei einer weiter bevorzugten Ausgestaltungsform werden die gestellten Diagnosen bezüglich der Candida-Art automatisch statistisch erfaßt. Dies erlaubt vorteilhaft die automatische Gewinnung epidemiologisch wichtiger Daten ohne den hierfür ansonsten notwendigen Aufwand betreiben zu müssen, was zu einer Zeit- und somit Kosteneinsparung führt.

Zur Lösung der vorstehenden Aufgabe wird ferner eine Vorrichtung vorgeschlagen, mittels welcher das Bilderkennungsverfahren zur Auswertung von Dunkelfeldbildem hinsichtlich der sich im untersuchten, nativen Blut befindenden Objekte durchgeführt werden kann.

Diese vorgeschlagene Vorrichtung weist ein Dunkelfeldmikroskop zur Erzeugung und Ausgabe von Dunkelfeldbildern von in nativem Blut befindlicher Objekte, eine Auswerteeinrichtung zur Analyse und Auswertung spezifischer Muster eines Bildes, eine Vergleichseinheit zum Vergleich der spezifischen Muster eines Bildes mit in einer Datenbank abgelegten Mustern und eine Ausgabeeinheit zur Ausgabe des Ergebnisses der Analyse und Auswertung des Bildes, um welche Candida-Art, wie bspw. Candida albicans, Candida parapsilosis, Candida sklerosis u. a ., es sich konkret handelt, auf.

Diese erstmals vorgeschlagene Vorrichtung, insbesondere zur Durchführung eines Bilderkennungsverfahrens, zur Auswertung von Dunkelfeldbildern von Candida in nativem Blut weist alle im Zusammenhang mit dem erfinderischen, vorstehend diskutierten Verfahren ebenfalls diskutierten Vorteilen auf.

Vorteilhafte Weiterbildungen der erfindungsgemäßen Vorrichtung ergeben sich aus den Merkmalen der Unteransprüche 11 bis 14.

So weist die erfindungsgemäße Vorrichtung in einer bevorzugten Ausführungsform eine Speichereinrichtung für die aufgenommenen Dunkelfeldbilder sowie für weitere Informationen wie bspw. Befundungstext oder dgl. auf. Dies ermöglicht es vorteilhaft, Dunkelfeldbilder einer Blutuntersuchung zu speichern, um die Bilder und ggf. zusätzlich eingegebene Informationen für einen späteren Vergleich etwa im Rahmen einer zusätzlichen oder erneuten Untersuchung zur Verfügung zu haben, ohne einen teuren Hardcopy-Ausdruck machen zu müssen.

Ein weiterer Vorteil dieser Ausführungsform besteht in der jederzeit möglichen Reproduktion der einmal aufgenommenen Untersuchungsergebnisse durch Speichern der aufgenommenen Dunkelfeldbilder auf dem hierfür geeigneten Speichermedium. Diese Dokumentation und Reproduktion ist insbesondere aufgrund bspw. forensischer Belange von größtem Interesse.

In einer weiter bevorzugten Ausführungsform weist die erfindungsgemäße Vorrichtung eine Einrichtung zur Datenfernübertragung auf. Bei dieser Einrichtung zur Datenfernübertragung kann es sich bspw. über die nötige Ausstattung für eine Verbindung mit dem Internet oder auch um Mailprogramme handeln. Diese Anbindung erlaubt es, durch Dunkelfelduntersuchung gewonnene Bilder beispielsweise über das Intemet zu versenden. Dieses Versenden von Bildern ermöglicht vorteilhaft eine patientenferne Befundung durch erfahrene Spezialisten. Auch das Einholen einer zweiten Meinung eines Kollegen ist auf diese Weise vorteilhaft möglich. Ferner können Untersuchungsergebnisse einschließlich der aufgenommen Bilder der Blutuntersuchung auf Candida bei einer späteren Untersuchung des Patienten in der Praxis eines Kollegen diesem rasch zur Verfügung gestellt werden.

In einer weiter bevorzugten Ausführungform weist die erfindungsgemäße Vorrichtung Hard- und Software auf, mittels derer Untersuchungsbefunde objektiv klassifiziert und/oder quantifiziert werden können. So können zu unterschiedlichen Zeitpunkten durchgeführte Untersuchungen hinsichtlich ihrer Ergebnisse verglichen werden. Schleichende Veränderungen, die dem menschlichen Auge entgehen können, sind aufgrund der vorteilhaft durchführbaren, objektiven Klassifizierung zuverlässig feststellbar. Veränderungen des zu verschiedenen Zeitpunkten untersuchten Bluts werden mittels der erfindungsgemäßen Vorrichtung somit auf vorteilhafte Weise frühzeitiger erfaßt.

Ferner weist die erfindungsgemäße Vorrichtung in einer weiter bevorzugten Ausführungsform eine Einrichtung auf, die Proben automatisch zur Untersuchung auf den Untersuchungsplatz des Dunkelfeldmikroskops befördert, eine Dunkelfeldaufnahme veranlaßt, für die nötige Bildauswertung sorgt und die Blutprobe wieder zur weiteren Lagerung zurückbefördert. Diese Einrichtung übernimmt alle Tätigkeiten, die zum üblichen Aufgabenbereich des Mikroskopierpersonals gehören. Die erfindungsgemäße Vorrichtung erzielt in der vorliegenden Ausführungsform somit vorteilhaft einen hohen Grad an Automatisierung der Blutuntersuchung. Da eine Besonderheit der Untersuchung von nativem Blut mittels der Dunkelfeldmikroskopie in wiederholten, zeitlich versetzten Untersuchungen derselben Blutprobe über einen Zeitraum von bis zu einigen Tagen oder sogar Wochen besteht, wird mit der erfindungsgemäßen Vorrichtung dieser Ausführungsform eine bedeutende Zeitersparnis für das Untersuchungspersonal und somit eine beachtliche Kosteneinsparung erzielt.

Die Erfindung wird nachfolgend in Ausführungsbeispielen anhand der Figuren der Zeichnung näher erläutert. Es zeigt:
- Fig. 1: eine nachskizzierte Darstellung eines mittels eines Dunkelfeldmikroskops etwa eine Stunde nach Blutentnahme aufgenommenen Dunkelfeldbildes von Candida albicans in nativem Blut;
- Fig. 2: eine nachskizzierte Darstellung eines Dunkelfeldbildes von Candida albicans in Nestform (eine halbe Stunde nach Blutentnahme);
- Fig. 3: eine nachskizzierte Darstellung eines Dunkelfeldbildes von Candida albicans (eine Stunde nach Blutentnahme);
- Fig. 4: eine nachskizzierte Darstellung eines Dunkelfeldbildes von Candida parapsilosis (zwei Tage nach Blutentnahme);
- Fig. 5: eine nachskizzierte Darstellung eines Dunkelfeldbildes von Candida parapsilosis (drei Tage nach Blutentnahme);
- Fig. 6: eine nachskizzierte Darstellung eines Dunkelfeldbildes von Candida sklerosis (vier Tage nach Blutentnahme); und
- Fig. 7: eine nachskizzierte Darstellung eines Dunkelfeldbildes von Candida sklerosis (drei Tage nach Blutentnahme).

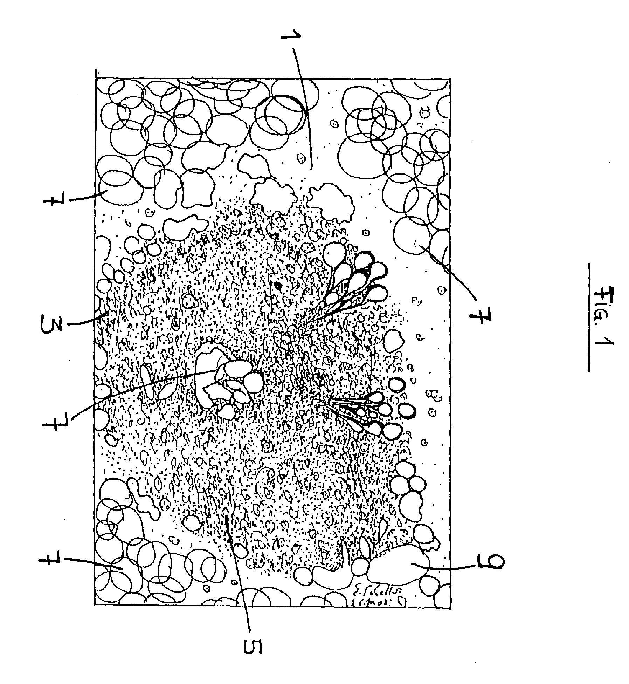

Fig. 1 bis Fig. 7 zeigen nachskizzierte Darstellungen von Dunkelfeldbildern, die mit dem Dunkelfeldmikroskop Axioskop II der Firma Zeiss bei 1.250-facher Vergrößerung und unter Verwendung des Objektivs "Achroplan" 100x oil IRIS aufgenommen wurden. Derlei Dunkelfeldbilder können auch mit anderen Dunkelfeldmikroskopen, insbesondere auch mit Dunkelfeldmikroskopen anderer Hersteller, aufgenommen werden.

Die verwendeten Tropfen nativen Nüchternbluts wurden hauchdünn unter jeweils einem Deckgläschen bis zum Rand zerlaufen lassen, ohne dabei aufzustauen.

Fig. 1 zeigt Candida albicans in nativem Blut eine Stunde nach Blutentnahme in einer der Variationen, in der Candida albicans auftreten kann. Bei der hier dargestellten Form handelt es sich um die Nestform. Da es sich bei der unter dem Dunkelfeldmikroskop betrachteten und nachskizziert dargestellten Blutprobe um Blut von Patienten handelt, die zum Zeitpunkt der Blutabnahme nüchtem waren, zeigen die Nester 1 bzw. Bläschen unter dem Dunkelfeldmikroskop eine rege Bewegung. Sie unterscheiden sich hiermit zu ähnlich aussehenden und ebenfalls unter Einbeziehung von Thrombozyten 3 und Fibrinfäden 5 aufgebauten Mikrothromben, wie sie in nativem Blut ebenfalls zu finden sind. Jedoch weist das Innere der Bläschen wimmelnde Keime auf. Das typische Nest 1 von Candida albicans zeigt sich als Anhäufung von Thrombozyten 3 und Fibrinfäden 5, in deren Mitte oftmals nur eine oder wenige Candidabläschen sitzen. Die anteilsmäßig größte Masse der oft bedeutend großen Nester 1 besteht aus Thrombozyten sowie Filiten. Die Nestgröße kann erstaunlich große Ausmaße annehmen. Es wurden bereits Nester 1 gefunden, deren Größe die eines Erythrozyten übersteigen, normal scheint jedoch etwa ein Zehntel der Größe des Erythrozyten zu sein.

Fig. 1 zeigt ferner eine Vielzahl von Erythrozyten 7. Im Inneren des dargestellten Candidanests 1 findet zum Zeitpunkt der Aufnahme eine Phagozytose von Erythrozyten 7 statt. In dem an das Nest 1 angrenzenden Bereich werden Einziehungen der anwesenden Erythrozyten 7 beobachtet. Im oberen rechten Bildbereich ist ein Leukozyt 9 zu erkennen.

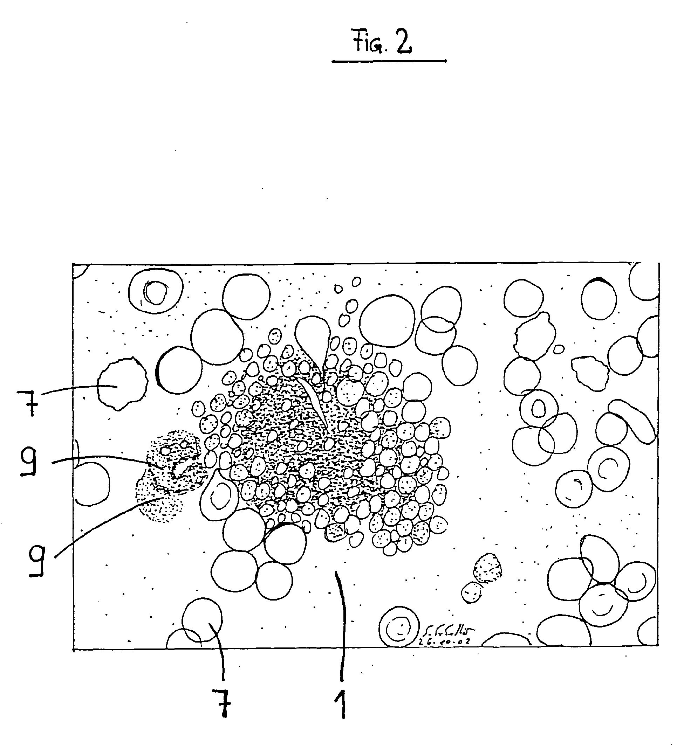

Fig. 2 zeigt ebenfalls eine nachskizzierte Aufnahme von Candida albicans in nativem Blut. Der Pilz liegt hierbei erneut als Candidanest 1 in Nestform vor und ist von Erythrozyten 7 umgeben. Die der Fig. 2 zugrundeliegende Aufnahme wurde eine halbe Stunde nach Blutentnahme beim nüchternen Patienten aufgenommen bzw. durchgeführt und zeigt am linken Bildrand zwei Leukozyten 9.

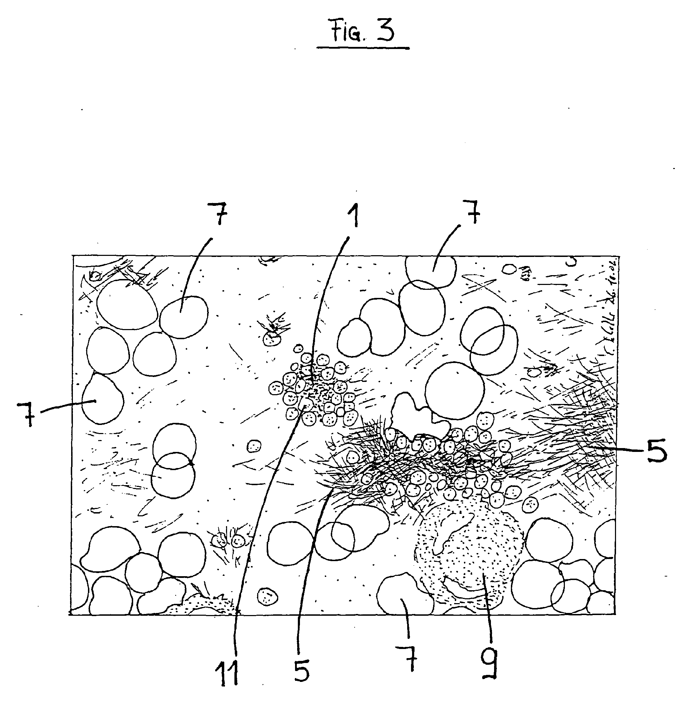

Fig. 3 zeigt wiederum ein Candida albicans, wobei typische Candida-Bläschen mit Fibrinfäden 5 im Aufbau eines Nestes 1 begriffen sind. Die entsprechende Blutabnahme fand eine Stunde vor Aufnahme des Dunkelfeldbildes statt.

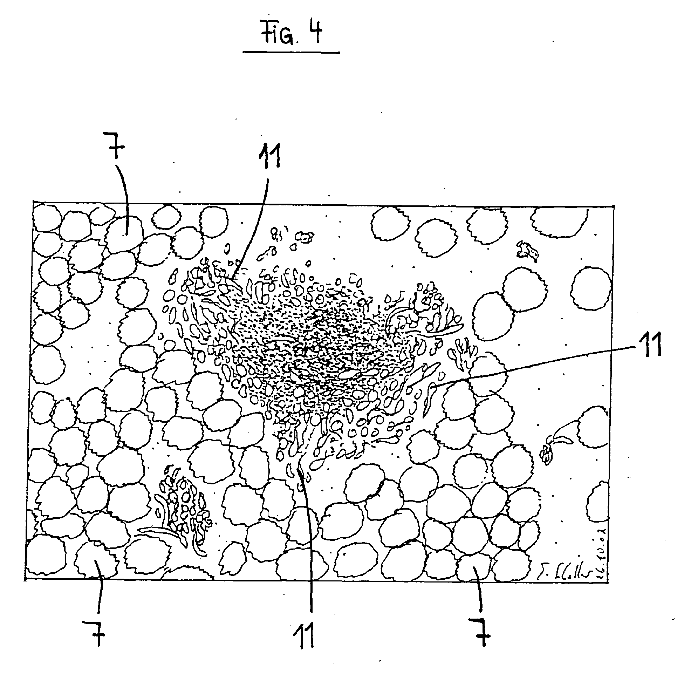

In Fig. 4 ist eine weitere Candida-Art dargestellt. Es handelt sich hierbei um Candida parapsilosis. Zu erkennen sind neben den bekannten Erythrozyten 7 kleine Bläschen 11 mit Chlamydo-Sporen. Diese Candida-Form hängt stets in Trauben zusammen und weist deutlich zu erkennende, schlauchartige Verbindungen, die sogenannten Chlamydo-Sporen auf, welche den Synasciten Leptotricchia buccalis ähnlich sehen. Bei den dargestellten Bläschen 11 handelt es sich um die genannten schlauchähnlichen Verbindungen, in denen Keime übertragen werden. Auch bei Candida parapsilosis kommt es zu massivem Blutstrich und Organbefall. Ein gemeinsames Auftreten von Candida parapsilosis und Candida albicans ist häufig zu beobachten. Die der vorliegenden Skizze zugrundeliegende Dunkelfeldaufnahme wurde am zweiten Tag nach Blutentnahme aufgenommen.

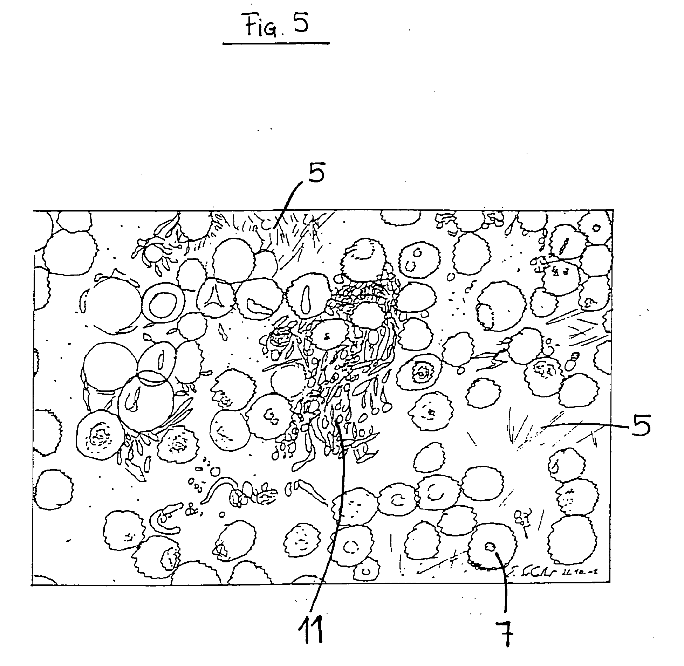

Fig. 5 stellt wiederum Candida parapsilosis mit Fibrinfäden 5, Bläschen 11 mit Chlamydo-Sporen sowie eine Vielzahl von Erythrozyten 7 dar.

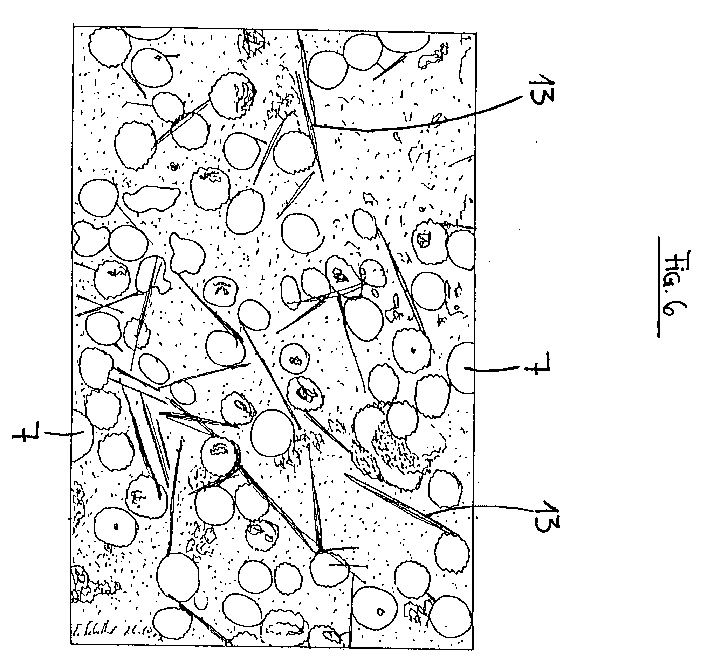

In Fig. 6 ist eine weitere Candida-Form dargestellt. Es handelt sich hierbei um eine im Rahmen dieser Erfindung erstmals beschriebene Candida-Form, die aufgrund ihres Erscheinungsbildes vom Erfinder als Candida sklerosis bezeichnet wird. Candida sklerosis ist eine Candida-Form, bei der Candida die Form von Nadeln 13 annimmt, die gläsern und starr wirken und schwierig zu erkennen sind. Diese Formen finden sich intrazellulär in den Erythrozyten 7 als verdichtete, kleine kugelförmige Gebilde, die erst in Verbindung mit dem Blutplasma eine Stopfnadelform annehmen. Diese neuartige Form wird von Candida nach Ausstülpung 15 aus den Erythrozyten 7 angenommen. Die der Fig. 6 zugrundeliegende Dunkelfeldaufnahme wurde am vierten Tag nach Blutentnahme aufgenommen.

Candida sklerosis als neue Candidavariante findet sich intrazellulär und nimmt bei Ausstülpung aus den Erythrozyten eine starre Säurestäbchenform an, sie ähnelt damit einer Stopfnadel mit ösenartiger Kopfform. Diese Candida-Art wird häufig erst kurz vor dem Zerfall des Blutes sichtbar, das heißt einige Tage nach Blutentnahme.

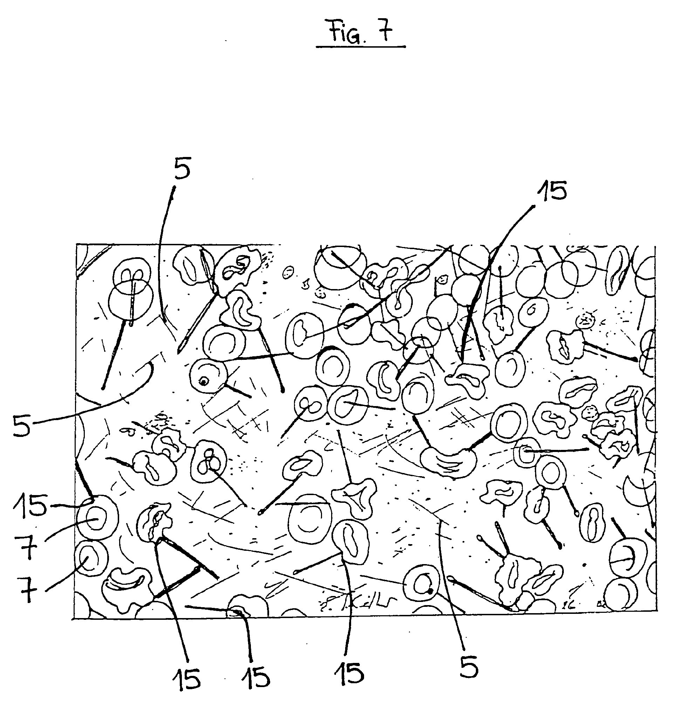

Fig. 7 zeigt die in Fig. 6 genannten Ausstülpungen 15 der sklerotisierenden Candida-Form aus den Erythrozyten 7. Das untersuchte Blut war zum Zeitpunkt der Aufnahme drei Tage alt.

Es wird angenommen, daß neben den vorstehend diskutierten Candida-Formen ständig neue Formen entstehen, und es gibt Hinweise darauf, daß sie aus Candida albicans bzw. aus Zwischenstufen, die auf Candida albicans zurückzuführen sind, entstehen.

Zum besseren Verständnis der vorliegenden Erfindung sowie ihrer Bedeutung seien folgende Erklärungen zu Candida, der entsprechenden Diagnose sowie den betreffenden Symptomen und der empfohlenen Therapie gegeben.

Bei der Suche nach Candida im Blut mittels der Dunkelfeldmikroskopie fallen Mikrothromben auf. An ihrem Rand befinden sich wimmelnde Bläschen die, aufgrund sich bewegender Keime im Bläscheninneren in Bewegung sind. Hierbei handelt es sich um Candida-Bläschen, deren Bewegungen im Nüchternblut zu beobachten sind, nicht jedoch nach Mahlzeiten.

Candida nimmt u. a. diese Bläschenform an, um sich mit einer hauchdünnen Membran gegen den für Candida an sich zu basischen ph-Wert des Bluts zu schützen.

Es kann davon ausgegangen werden, daß vor allem Tiere aus Massentierhaltungen aufgrund der dort regelmäßig durchgeführten Antibiotikabehandlungen eine Candidamykose aufweisen. Diese Mykosen sind jedoch im Blut mittels Antikörper-Suchtests nicht nachzuweisen. Dies ist vor allem darauf zurückzuführen, daß sich Candida in seiner ursprünglichen Form als Hefe nicht im Blut behaupten kann und sich in diesem daher auch keine für eine Quantifizierung ausreichende Zahl an Antikörpern findet. Candida wandelt sich vielmehr um und liegt als Theciten in typischer Bläschenform vor. Innerhalb der Bläschen produziert Candida saure Substanzen, die zum Beispiel bei Kontakt mit Leukozyten deren Granula verätzen. Dies ist ebenfalls im Dunkelfeldmikroskop zu beobachten.

Die optimale Behandlung einer Blutmykose erfordert einen konsequenten Verzicht auf den Einsatz von Antimykotika. Die Behandlung von Patienten mit bestehender Blutmykose hat gezeigt, daß mit Antimykotika vorbehandelte Patienten zu ihrer Genesung ungleich länger mit isopathischen Stoffen behandelt werden müssen.

Ferner umfaßt die Behandlung der Darmmykose stets auch die Umstellung der Ernährung auf kohlenhydratarme Nahrung. Entsprechende Hinweise kann jeder entsprechend ausgebildete Therapeut geben. Diese Emährungsumstellung ist natürlich auch bei der Blutmykose erforderlich.

Zudem wird bei der Darmmykose auf folgende isopathische Medikamente zurückgegriffen: Exmykehl D 5 dil. (Holomed NL), bestehend aus Albicansan D 5 dil., Pefrakehl D 5 dil., Fortakehl D 5 dil. unter Zugabe von Sanukehl Cand D 6 dil. Je nach Fall erfolgt eine Behandlung über 2 bis 6 Monate. Bei der Blutmykose gibt man Exmykehl D 5 dil. sowie Sanukehl Cand D 6 dil. über vier Monate, bei starkem Befall oder nach Anitmykotika-Vorbehandlung über etwa 6 bis 8 Monate. Stets erfolgt eine Ergänzung von organspezifischen Homöopathika. Exmykehl D 5 dil. kann durch Albicansan D 5 dil. und Pefrakehl D 5 dil. und Fortakehl D 5 dil. ersetzt werden. Ergänzend können therapeutisch bei Blut und/oder Darmmykose auch Pararezole aus der Gruppe der sogenannten Rezole eingesetzt werden.

Auch präventiv oder prophylaktisch empfiehlt es sich mehrmals jährlich die Mittel Exmykehl D 5 dil. oder Albicansan D 5 dil. und Pefrakehl D 5 dil., Fortakehl D 5 dil. und zusätzlich unbedingt das Hapten Sanukehl Cand D 6 dil. einzunehmen, um eine Auskeimung der über die Nahrungskette aufgenommenen Candidahefe zu vermeiden.

Hefepilze, insbesondere Candida, produzieren eine Vielzahl von Stoffwechselprodukten, die für den menschlichen Gastkörper schädlich sind. Es ist daher nicht weiter verwunderlich, daß Candida mit einer Reihe von unterschiedlichen Erkrankungen begleitend aber auch kausal in Verbindung gebracht wird. Diese Toxine können gelegentlich als flaschengrüne, kleinste Partikel in den Candidanestern oder als brilliantgrüne, größere Punkte in den Lymphozyten festgestellt werden oder als große, oft riesige graue Haufen kleinster Bläschen, die allesamt erst kurz vor dem Zerfall der Erythrozyten auftreten. Interessant ist die Beziehung zwischen Candidabefall und einer Schwermetallbelastung des Patienten. Eine zeitgleiche Schwermetallausleitung, wie sie vom Heilpraktiker fachgerecht durchgeführt wird, zusammen mit der Candidatherapie, empfiehlt sich daher. Andererseits weiß man, daß Candida stets für eine erhöhte Schwermetallbelastung des Körpers verantwortlich ist. Ein Rückgang dieser Belastung wird bei konsequenter Candidatherapie als erfreulicher Nebeneffekt beobachtet.

Mit der vorliegenden Erfindung wird erstmals ein Bilderkennungsverfahren zur Auswertung von mittels Dunkelfeldmikroskopie erzeugter Dunkelfeldbilder von sich in nativem Blut befindenden Objekten vorgeschlagen, bei den es sich bspw. um Candida albicans, Candida parapsilosis, Candida sklerosis oder andere Candida-Arten handeln kann. Das vorgeschlagene Verfahren umfaßt die Schritte Bilderzeugung und Bildausgabe, Vergleich spezifischer Muster eines Bildes mit bekannten Mustern, Feststellung von Abweichungen und/oder Übereinstimmungen, und Ausgabe des Ergebnisses, um welche Candida-Art es sich handelt. Die vorliegende Erfindung gibt ferner eine insbesondere zur Durchführung des erfindungsgemäßen Verfahrens geeignete Vorrichtung an.

### Bezugszeichenliste

- 1: Nest, Candidanest, Candidabläschen
- 2 3: Thrombozyt
- 4 5: Fibrinfaden
- 6 7: Erythrozyt
- 8 9: Leukozyt
- 10 11: Bläschen mit Chlamydosporen
- 12 13: Nadel
- 14 15: Ausstülpung

## Patentansprüche

1. Bilderkennungsverfahren zur Auswertung von mittels Dunkelfeldmikroskopie erzeugter Dunkelfeldbilder von in nativem Blut befindlicher Objekte, wie beispielsweise Candida albicans, Candida parapsilosis, Candida sklerosis oder anderen Candida-Arten, mit den Schritten:
a) Bilderzeugung und Bildausgabe,
b) Vergleich spezifischer Muster eines Bildes mit bekannten Mustern,
c) Feststellung von Abweichungen und/oder Übereinstimmungen, und
d) Ausgabe des Ergebnisses, um welche Candida-Art es sich handelt.

2. Bilderkennungsverfahren nach Anspruch 1, **dadurch gekennzeichnet, daß** die erzeugten Dunkelfeldbilder in einer Speichereinrichtung abgelegt werden.

3. Bilderkennungsverfahren nach Anspruch 1 oder 2, **dadurch gekennzeichnet, daß** Bilddaten und/oder zusätzliche Informationen mittels einer Datenübertragungseinrichtung übertragen werden.

4. Bilderkennungsverfahren nach einem der Ansprüche 1 bis 3, **dadurch gekennzeichnet, daß** Untersuchungsbefunde in einer Klassifizierungseinrichtung klassifiziert werden und/oder in einer Auswertungseinrichtung von Dunkelfeldbildem ausgewertet werden.

5. Bilderkennungsverfahren nach einem der Ansprüche 1 bis 4, **dadurch gekennzeichnet, daß** die Aufnahme und/oder Verwaltung von Dunkelfeldbildem und/oder die Verwaltung zusätzlicher Informationen automatisch abläuft.

6. Bilderkennungsverfahren nach einem der Ansprüche 1 bis 5, **dadurch gekennzeichnet, daß** die Einstellungen für die Bilderzeugung und/oder Ausgabe, insbesondere der zu wählende Vergrößerungsmaßstab, automatisch optimiert werden.

7. Bilderkennungsverfahren nach einem der Ansprüche 1 bis 6, **dadurch gekennzeichnet, daß** in Abhängigkeit der festgestellten Candida-Art Behandlungsvorschläge ausgegeben werden.

8. Bilderkennungsverfahren nach einem der Ansprüche 1 bis 7, **dadurch gekennzeichnet, daß** ein schneller Austausch der Daten mit externen Rechenzentren und/oder medizinischen Datenbanken erfolgt.

9. Bilderkennungsverfahren nach einem der Ansprüche 1 bis 8, **dadurch gekennzeichnet, daß** automatisch Statistiken über die erkannten Candida-Arten angelegt werden.

10. Vorrichtung, insbesondere zur Durchführung des Bilderkennungsverfahrens nach einem der Ansprüche 1 bis 9, mit
- einem Dunkelfeldmikroskop zur Erzeugung von Dunkelfeldbildem von in nativem Blut befindlicher Objekte, wie beispielsweise Candida albicans, Candida parapsilosis, Candida sklerosis oder anderen Candida-Arten,
- einer Auswerteeinrichtung zur Analyse und Auswertung spezifischer Muster eines Bildes,
- einer Vergleichseinheit zum Vergleich der spezifischen Muster eines Bildes mit in einer Datenbank abgelegten Mustern,
- einer Ausgabeeinheit zur Ausgabe des Ergebnisses der Analyse und Auswertung des Bildes, um welche Candida-Art es sich handelt.

11. Vorrichtung nach Anspruch 10, **dadurch gekennzeichnet, daß** sie eine Speichereinrichtung für Dunkelfeldbilder aufweist.

12. Vorrichtung nach Anspruch 10 oder 11, **dadurch gekennzeichnet, daß** sie eine Einrichtung zur Übertragung von Bilddaten und/oder zusätzlicher Informationen aufweist.

13. Vorrichtung nach einem der Ansprüche 10 bis 12, **dadurch gekennzeichnet, daß** sie eine Einrichtung zum Klassifizieren von Befunden der Untersuchung und/oder zur Auswertung von Dunkelfeldbildern aufweist.

14. Vorrichtung nach einem der Ansprüche 10 bis 13, **dadurch gekennzeichnet, daß** sie eine Einrichtung zur Automatisierung der Aufnahme und/oder Verwaltung von Dunkelfeldbildern und/oder zusätzlicher Informationen aufweist.
